Europäisches Patentamt

European Patent Office

Office européen des brevets

(19)

(11) **EP 1 571 470 A1**

## (12) EUROPEAN PATENT APPLICATION
published in accordance with Art. 158(3) EPC

(43) Date of publication:
07.09.2005 Bulletin 2005/36

(21) Application number: 03780715.3

(22) Date of filing: 11.12.2003

(51) Int Cl.7: **G02B 6/00**, G02B 6/20

(86) International application number:
**PCT/JP2003/015830**

(87) International publication number:
**WO 2004/053545 (24.06.2004 Gazette 2004/26)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.12.2002 JP 2002359871**

(71) Applicants:
- **NIPPON TELEGRAPH AND TELEPHONE CORPORATION**
  **Tokyo 100-8116 (JP)**
- **Mitsubishi Cable Industries, Ltd.**
  **Hyogo 664-0027 (JP)**

(72) Inventors:
- **KUBOTA, Hirokazu**
  **NTT Intellectual Property Center**
  **Musashino-shi, Tokyo180 -8585 (JP)**

- **KAWANISHI, Satoki**
  **NTT Intellectual Property Center**
  **Musashino-shi, Tokyo 180-8585 (JP)**
- **SUZUKI, Kazunori**
  **NTT Intellectual Property Center**
  **Musashino-shi, Tokyo 180-8585 (JP)**
- **SUZUKI, Akihito**
  **MITSUBISHI CABLE INDUSTRIES, LTD.**
  **Itami-shi, Hyogo 664-0027 (JP)**
- **TANAKA, Masatoshi**
  **MITSUBISHI CABLE INDUSTRIES, LTD**
  **Itami-shi, Hyogo 664-0027 (JP)**
- **FUJITA, Moriyuki**
  **MITSUBISHI CABLE INDUSTRIES, LTD**
  **Itami-shi, Hyogo 664-0027 (JP)**

(74) Representative: **TBK-Patent**
**Bavariaring 4-6**
**80336 München (DE)**

## (54) SINGLE MODE PHOTONIC CRYSTAL OPTICAL FIBER

(57) A single mode photonic crystal fiber including a core with a geometric radius $\rho$, and a cladding surrounding the core, the cladding including a plurality of cylindrical air holes which have a diameter d and are arranged periodically at center-to-center spacings of $\Lambda$. A design is made such that the center-to-center spacing $\Lambda$ between the air holes is made 1.5 or more times greater than a wavelength $\lambda$ of propagation light, and a V value given by the following expression is made greater than 2.4 and less than 3.3. At least one of geometric placement of the air holes in the cladding and optical constant distribution of the cladding or core is set less than three-fold rotational symmetry with respect to a central axis of the core.

$$V = \frac{2\pi\rho}{\lambda} \left( n^2_{core} - n^2_{eff} \right)^{1/2}$$

where $n_{eff}$ is an effective refractive index of the cladding, and $n_{core}$ is a refractive index of the core.

EP 1 571 470 A1

**FIG.1A**

**FIG.1B**

**Description**

TECHNICAL FIELD

The present invention relates to a single mode photonic crystal fiber, and more particularly to a single mode photonic crystal fiber with a small bending loss.

BACKGROUND ART

A single mode optical fiber has a single mode or degenerate multiple modes as its propagation mode. Accordingly, it has no waveform distortion due to modal dispersion during propagation, and has good mode matching with a variety of optical components. Thus, it is widely used as a variety of optical components and optical transmission lines.

As for a single mode optical fiber with a photonic crystal structure (single mode photonic crystal fiber), in particular, its characteristic design is possible by changing the arrangement of air holes in the cladding. For example, a structure including air holes disposed in a hexagonal close packed fashion is the easiest-to-fabricate structure of optical fibers. Specifically, disposing circular cylinders with the same diameter without spacings naturally forms a hexagonal close packed structure in the cross section. In this state, it is possible to fabricate an optical fiber with a structure, in which air holes with a given diameter are disposed spatially in the cladding, by arranging cylindrical glass preforms corresponding to the cladding of the optical fiber, the glass preforms having holes with a desired diameter at the their centers in the direction of the generating lines. In addition, it is possible to vary a local effective refractive index of the optical fiber by differentiating the diameter of some air holes from the diameter of the other air holes. Furthermore, as for the optical fiber with a photonic crystal structure, since its characteristics depend on the refractive index difference between the air and glass, it is also possible to vary the wavelength dependence of the characteristics by changing the arrangement of the air holes.

As for the conventional single mode photonic crystal fiber, it was considered as in the ordinary single mode optical fibers that the value of the normalized frequency V must be equal to or less than 2.4, or the value of the effective normalized frequency $V_{eff}$ given by the following expression must be equal to or less than 4 (see T. Bricks et al. , Opt. Lett. , vol. 22, p. 961 (1997)).

$$V_{eff} = \frac{2\pi\Lambda}{\lambda} (n^2_{core} - n^2_{eff})^{1/2}$$

where $\Lambda$ is the average spacing between the centers of the air holes, $\lambda$ is the wavelength of the propagation light, $n_{core}$ is the refractive index of the core, and $n_{eff}$ is the effective refractive index of the cladding.

Generally, it is preferable to increase the V value for the structure for reducing the optical leakage when bending the optical fiber (bending loss). However, the conventional single mode photonic crystal fiber cannot increase the V value sufficiently, so that it is difficult to suppress the bending loss. In addition, it has a narrow range of the V value allowed for the reduced loss, thereby offering a problem of narrowing the optical characteristic range such as the dispersion characteristic.

DISCLOSURE OF THE INVENTION

The present invention is implemented to solve the foregoing problems. Therefore it is an object of the present invention to provide a single mode photonic crystal fiber having great design flexibility of the optical characteristics and a low bending loss.

To accomplish the object, according to a first aspect of the present invention, there is provided a single mode photonic crystal fiber including a core with a geometric radius $\rho$ , and a cladding surrounding the core, the cladding including a plurality of cylindrical air holes which extend in a longitudinal direction of the fiber, have a diameter d, and are arranged periodically at center-to-center spacings of $\Lambda$ , wherein the core and the cladding are made of glass or plastics, and a design is made such that the center-to-center spacing $\Lambda$ between the air holes is made 1.5 or more times greater than a wavelength $\lambda$ of propagation light, and a normalized frequency V given by the following expression is made greater than 2.4 and less than 3.3:

$$V = \frac{2\pi\rho}{\lambda}(n^2_{core} - n^2_{eff})^{1/2}$$

where $n_{eff}$ is the effective refractive index of the cladding, and $n_{core}$ is the refractive index of the core.

According to a second aspect of the present invention, in the single mode photonic crystal fiber of the first aspect of the present invention, at least one of the geometric placement of the air holes in the cladding and the optical constant distribution of the cladding or of the core is set in a manner as to make less than three-fold rotational symmetry with respect to a central axis of the core, and the degeneracy of polarization modes of the propagation light is removed.

BRIEF DESCRIPTION OF THE DRAWINGS

FIG. 1A is a cross-sectional view of a single mode photonic crystal fiber in accordance with the present invention;
FIG. 1B is an enlarged view near the core shown in FIG. 1A;
FIG. 2A is a view illustrating intensity distribution of high-order mode electromagnetic field in a single mode photonic crystal fiber;
FIG. 2B is a view illustrating intensity distribution of high-order mode electromagnetic field in a non-single mode photonic crystal fiber; and
FIG. 3 is a view illustrating a structure of a polarization-maintaining single mode photonic crystal fiber in accordance with the present invention.

BEST MODE FOR CARRYING OUT THE INVENTION

The present invention will now be described in detail with reference to the accompanying drawings.

EMBODIMENT 1

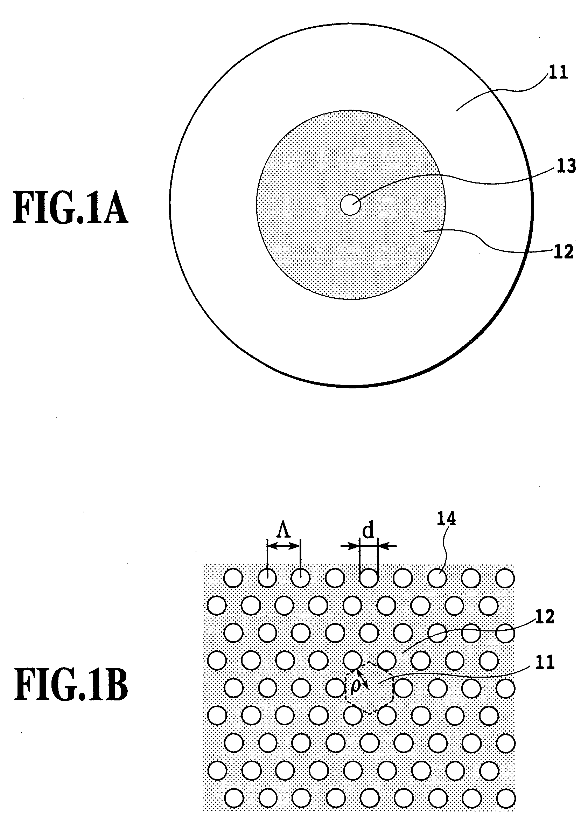

FIGs. 1A and 1B are views illustrating a single mode photonic crystal fiber in accordance with the present invention: FIG. 1A is a cross-sectional view of the optical fiber; and FIG. 1B is an enlarged view near the core of FIG. 1A.
The optical fiber, which is made of glass or plastics, has a core 11 with a geometric radius $\rho$ at the center of a cladding 12 whose outer surface is covered with a fiber material 13. The cladding 12 includes many air holes 14 with a diameter d, which are disposed periodically at center-to-center spacings of $\Lambda$, and extend in the propagation direction of light. The core 11 includes no air holes, but is surrounded by the air holes 14 of the cladding 12.
The single mode optical fiber in accordance with the present invention is designed in such a manner that the center-to-center spacing $\Lambda$ between the air holes is made 1. 5 or more times greater than the wavelength $\lambda$ of the propagation light, and the V value, which is obtained from the effective refractive index $n_{eff}$ of the cladding 12 and the refractive index $n_{core}$ of the core material by applying the following expression (1), is made greater than 2.4 and less than 3.3.

$$V = \frac{2\pi\rho}{\lambda} \left( n^2_{core} - n^2_{eff} \right)^{1/2} \tag{1}$$

Here, the effective refractive index $n_{eff}$ of the cladding at the wavelength of the propagation light is defined as a refractive index when an electromagnetic wave is launched into an infinite plane with the same structure as the cladding, and is obtained by electromagnetic field analysis such as an FDTD method or finite element method. In addition, the refractive index $n_{core}$ of the core is determined by the core material. Furthermore, the geometric radius $\rho$ of the core 11 is defined as half the distance between opposite sides of the polygon inscribed in the air holes 14. In the case of the air hole arrangement as shown in FIGs. 1A and 1B, the inscribed polygon is a hexagon with $\rho = (2\Lambda - d)/2$.
Such a configuration of the single mode photonic crystal fiber is based on the following idea.
Generally, as for the optical fiber with the photonic crystal structure, it is possible to design its optical characteristics by the arrangement of the air holes. However, since the weakly-guiding approximation which holds for the conventional ordinary optical fiber does not hold for the photonic crystal fiber, the electromagnetic field analysis must be carried out to evaluate its characteristics. The inventor of the present invention carried out accurate calculations about the photonic crystal fiber, and found that when the average spacing $\Lambda$ between the centers of the air holes was greater than the wavelength $\lambda$ of the light used, the photonic crystal fiber could operate in the single mode if the V value was less than 3.3.
Table 1 summarizes the V values calculated at the wavelength 1.55 $\mu$m, in which numerals in the row designate the values of $\Lambda/\lambda$, and numerals in the column designate the values of $d/\Lambda$. The V values are calculated from the results of obtaining the effective refractive index $n_{eff}$ at the wavelength 1.55 $\mu$m by the electromagnetic field analysis using the FDTD method.

(Table 1)

|  | 1 | 1.5 | 2 | 3 | 4 | 5 | 6 |
|---|---|---|---|---|---|---|---|
| 0.9 | 3.084975001 | - | 5.239414873 | - | 6.905900079 | - | 7.493551128 |
| 0.8 | 2.886174789 | 3.808847846 | 4.398182032 | 5.070760951 | 5.436495416 | 5.663553153 | 5.817327725 |
| 0.7 | 2.633456507 | 3.333823439 | 3.74509337 | - | - | - | - |
| 0.6 | 2.36799343 | 2.926547295 | 3.239503162 | 3.571374006 | 3.745593367 | 3.85255735 | 3.925443222 |
| 0.5 | - | 2.568039343 | 2.826403078 | 3.090835754 | 3.225793778 | 3.308923979 | 3.364647526 |
| 0.4 | - | - | - | - | 2.806998399 | 2.87538232 | 2.921618315 |
| 0.3 | 1.507426261 | 1.88738991 | 2.108478301 | 2.330392458 | 2.436070975 | 2.498554896 | 2.539538169 |
| 0.1 | 0.661292571 | - | 1.122272096 | 1.402346686 | 1.562521901 | 1.658943835 | 1.72090935 |

Here, the calculations were carried out on the assumption that the single mode photonic crystal fiber had the simplest structure that bound glass pipes with the same outer diameter together and replaced the central one by a glass rod, and that the cladding had a structure including air holes extending infinitely.

In Table 1, the italic numerals indicate single mode regions, in which the high-order modes are not confined within the core (that is, they leak out from the core).

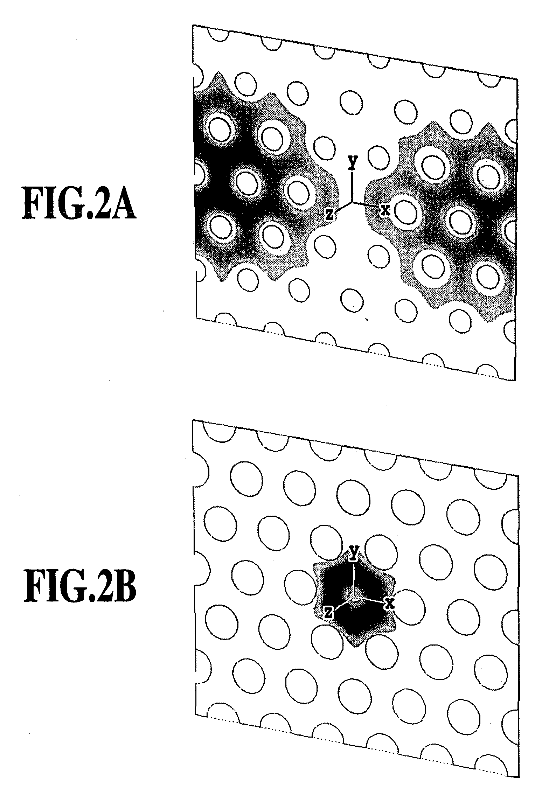

FIGs. 2A and 2B are cross-sectional views of the optical fiber for illustrating intensity distribution of the high-order mode electromagnetic field in the photonic crystal fiber: FIG. 2A illustrates an example of the intensity distribution of the electromagnetic field of a single mode optical fiber; and FIG. 2B illustrates that of a non-single mode optical fiber. The optical fiber has the core at its center with the air holes of the cladding surrounding the core. Darkened regions correspond to regions in which the light is concentrated.

From Table 1, it is found that when the center-to-center spacing $\Lambda$ between the air holes is 1.5 or more times greater than the wavelength $\lambda$ of the propagation light (that is, when $\Lambda/\lambda$ is equal to or greater than 1.5), the V value becomes less than 3.3, the photonic crystal fiber could operate in the single mode.

Incidentally, the analysis uses the V value as an indicator. This is because although the $V_{eff}$ value can be obtained more easily than the V value, the $V_{eff}$ value does not allow to consider the influence of the size of the air holes. In addition, as for the arrangement and number of the air holes of the cladding, they are not limited to those mentioned above. For example, air holes with different diameters can be placed in the cladding. Furthermore, the geometric radius of the core can be set flexibly and properly.

The single mode photonic crystal fiber with such a structure can be fabricated by binding a cylindrical glass rod for forming the core and multiple glass pipes for forming the cladding including the air holes. More specifically, a preform, which is formed by binding the cylindrical glass rod and the glass pipes, is heated and drawn so that the clearance between the cylindrical glass rod and the glass pipes, and the clearance between the glass pipes are eliminated during the drawing. As a result, the single mode photonic crystal fiber with the cross section structure as shown in FIG. 1A can be obtained.

The outer diameter of the photonic crystal fiber is a few tens to a few hundred micrometers, and the diameter of the air holes is about the same order of magnitude as the wavelength. In its fabrication process, however, since the preform, which has a similar cross section and the outer diameter of a few to a few tens of centimeters, is formed, followed by drawing to form a fiber as in the fabrication process of an ordinary optical fiber, it is enough to fabricate the preform with a desired cross section, and microprocessing is not required. For example, when circular cylinders with the same outer diameter are placed without clearance, the cross section has a hexagonal close packed structure which offers an advantage of facilitating the production. The photonic crystal structure can be implemented by using glass pipes as the circular cylinders which form the cladding, and using a glass rod in place of one or several center glass pipes can form the core, thereby being able to fabricate the pref orm of the optical fiber. In addit ion , a method of drilling holes in a lump of glass makes it possible to fabricate an optical fiber preform including air holes with desired arrangement. The fabrication method of the preform is not limited to the above.

Furthermore, it is also possible to fabricate a polarization-maintaining optical fiber by releasing the degeneracy of a polarized wave by making the rotational symmetry with respect to the central axis less than three by changing the position and size of part of the air holes.

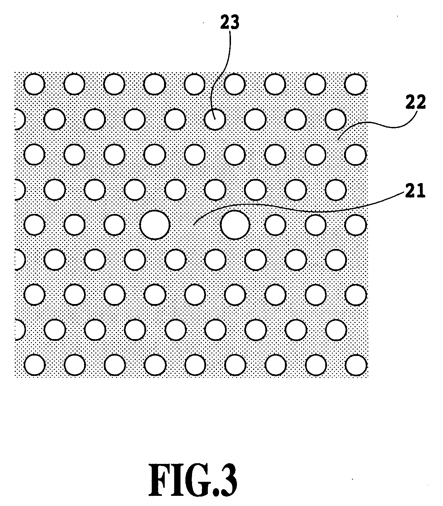

FIG. 3 is a view illustrating a structure of a polarization-maintaining single mode photonic crystal fiber in accordance with the present invention. It is an enlarged view near the core of the optical fiber when the rotational symmetry with respect to the center of the core is made two by making the diameter of two of the six air holes adjacent to the core different from the diameter of the other air holes. Incidentally, the method of destroying the axial symmetry is not limited to the foregoing method. For example, it can be achieved by changing the arrangement of the air holes 23, or by deviating the refractive index distribution of the core 21 or cladding 22 from the axial symmetry.

INDUSTRIAL APPLICABILITY

According to the present invention, since the design is made in such a manner that the center-to-center spacing $\Lambda$ between the air holes is 1.5 or more times greater than the wavelength $\lambda$ of the propagation light, and the V value is greater than 2.4 and less than 3.3, it is possible to provide a single mode photonic crystal fiber having high design flexibility of the optical characteristics and a small bending loss.

**Claims**

1. A single mode photonic crystal fiber comprising a core with a geometric radius $\rho$ , and a cladding surrounding the core, the cladding including a plurality of cylindrical air holes which extend in a longitudinal direction of the fiber, have a diameter d, and are arranged periodically at center-to-center spacings of $\Lambda$, wherein

said core and said cladding are made of glass or plastics, and

a design is made such that the center-to-center spacing Λ between said air holes is made 1.5 or more times greater than a wavelength λ of propagation light, and a normalized frequency V given by the following expression is made greater than 2.4 and less than 3.3:

$$V = \frac{2\pi\rho}{\lambda} \left( n^2{}_{core} - n^2{}_{eff} \right)^{1/2}$$

where $n_{eff}$ is an effective refractive index of said cladding, and $n_{core}$ is a refractive index of said core.

2. The single mode photonic crystal fiber as claimed in claim 1, wherein at least one of geometric placement of said air holes in said cladding and optical constant distribution of said cladding or of said core is set in a manner as to make less than three-fold rotational symmetry with respect to a central axis of said core, and the degeneracy of polarization modes of propagation light is removed.

FIG.1A

FIG.1B

FIG.2A

FIG.2B

**FIG.3**

## INTERNATIONAL SEARCH REPORT

| International application No. |
| --- |
| PCT/JP03/15830 |

**A. CLASSIFICATION OF SUBJECT MATTER**
Int.Cl⁷ G02B6/00, G01B6/20

According to International Patent Classification (IPC) or to both national classification and IPC

**B. FIELDS SEARCHED**

Minimum documentation searched (classification system followed by classification symbols)
Int.Cl⁷ G02B6/00, G01B6/20

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)
JICST FILE (JOIS)

**C. DOCUMENTS CONSIDERED TO BE RELEVANT**

| Category* | Citation of document, with indication, where appropriate, of the relevant passages | Relevant to claim No. |
| --- | --- | --- |
| X | KNIGHT, J.C. et al., "Properties of photonic crystal fiber and the effective index model", In:J.Opt.Soc. Am.A., Opt.image.sci. March 1998, Vol.15, No.3, pages 748 to 752 | 1 |
| Y | | 2 |
| Y | WO 00/49436 A1 (THE UNIVERSITY OF BATH[GB/GB]), Full text; Figs. 6, 7 & JP 2002-537575 A Full text; Figs. 6, 7 & AU 2565000 A & CN 1341221 A & EP 1153325 A1 & KR 1113696 A | 2 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 January, 2004 (26.01.04) | 10 February, 2004 (10.02.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)